# EUROPEAN PATENT SPECIFICATION

(11) **EP 3 646 020 B1**
(45) Date of publication and mention of the grant of the patent: **11.12.2024**
(21) Application number: 18743216.6
(22) Date of filing: 27.06.2018
(51) Int. Cl.: G01N 27/447

(54) **PULSE-FIELD MULTIPLEX CAPILLARY ELECTROPHORESIS SYSTEM**
PULSFELD-MULTIPLEX-KAPILLARELEKTROPHORESESYSTEM
SYSTÈME D'ÉLECTROPHORÈSE CAPILLAIRE MULTIPLEX EN CHAMP PULSÉ

(30) Priority: 27.06.2017 US 201715634846
(43) Date of publication of application: 06.05.2020
(73) Proprietor: Agilent Technologies, Inc., Santa Clara, CA 95051 (US)
(72) Inventor: VER MEER, Mark R., Ankeny, Iowa 50021 (US); UTHE, Jolita J., Ankeny, Iowa 50021 (US); WEI, Wei, Ankeny, Iowa 50021 (US); FOSTER, Martin Chris, Ankeny, Iowa 50021 (US); BOEKE, Bruce R., Ankeny, Iowa 50021 (US)
(74) Representative: Grünecker Patent- und Rechtsanwälte PartG mbB
(86) International application number: PCT/US2018/039668
(87) International publication number: WO 2019/005907

(56) References cited:
- WO-A1-03/062810
- US-A- 6 013 166
- US-A1- 2016 109 406

## Description

### CROSS REFERENCE TO RELATED APPLICATION

This application is a continuation-in-part of U.S. Ser. 14/984,039 filed December 30, 2015.

### BACKGROUND OF THE INVENTION

### 1. Field of the Invention

This invention relates to multi-channel pulsed-field capillary electrophoresis.

### 2. Description of Related Art

The current next-generation sequencing (NGS) platforms use a variety of technologies for sequencing, including pyrosequencing, ion-sequencing, sequencing by synthesis, or sequencing by ligation. Although these technologies have some minor variations, they all have a generally common DNA library preparation procedure, which includes genomic DNA quality & quality assessment, DNA fragmentation and sizing (involving mechanical shearing, sonication, nebulization, or enzyme digestion), DNA repair and end polishing, and a last step of platform-specific adaptor ligation. With a rapidly growing demand for DNA sequence information, there is a critical need to reduce the time required for the preparation of DNA libraries. Many commercial NGS systems are based on the sequencing of relatively short fragments of poly(nucleic acids), ranging from 30 base-pairs (bp) to 2000 bp in length. NGS systems based on pore or nanopore platforms use larger fragment sizes, ranging from 5000 bp or higher. In some cases, the desired fragment sizes are greater than 20,000 to 50,000 bp. Newer applications of long-range sequencers target fragment sizes of 50,000 bp to greater than 150,000 bp or longer.

A labor-intensive step in DNA library preparation is the qualification (size determination) and quantification of both un-sheared genomic DNA and downstream fragmented DNA. Existing methods for DNA fragment analysis include agarose gel electrophoresis, capillary electrophoresis, and chip-based electrophoresis. Agarose gel electrophoresis is labor intensive, requiring gel preparation, sample transfer via pipetting, and image analysis. The images obtained by agarose electrophoresis are often distorted, resulting in questionable or unreliable data. It is impossible to use agarose gel electrophoresis for accurate quantification of DNA, which means that a separate, second method (UV or fluorescence spectroscopy) is required for quantification. Finally, agarose gel electrophoresis is difficult to automate. Chip or micro-chip based electrophoresis provides an improvement in data quality over agarose gel electrophoresis but is still labor intensive. For example, chip-based methods require manual steps to load gel, markers and samples. Even though these microchip or chip based electrophoresis units can run a single sample in seconds or minutes, the sample and gel loading are barriers to ease-of-use, especially when running hundreds or thousands of samples. Also, existing chip-based systems are unable to quantify genomic DNA. Capillary electrophoresis (CE) offers advantages over both agarose electrophoresis and microchip electrophoresis in that gel-fill and sample loading is automated.

Standard constant electric field microchip and capillary electrophoresis systems will typically report DNA size values of no greater than 50,000 bp, even though the DNA fragments may be much larger. Thus, standard microchip and capillary electrophoresis systems are limited in their ability to accurately measure DNA fragment sizes above about 50,000 bp. Newer sequencing technology requires analysis of input DNA with sizes greater than about 50,000 bp.

The standard method for the analysis of large fragments or smears of DNA is Slab-Gel Pulsed-Field Gel Electrophoresis (PFGE) where DNA with size ranges from less than 1000 base pair (bp) to several million bp can be separated and accurately sized. A major limitation in PFGE is sample throughput, because the time required for analysis can range from several hours to several days, depending on the size range of interest and the complexity of sample preparation.

The technology of alternating, pulsed fields has been extended from PFGE to single-capillary electrophoresis, with the goal of decreasing analysis time of large DNA fragment from the hours/days of PFGE to less than two hours. For example, Karger in U.S. Pat. No. 5,122,248 describes a single-capillary pulsed field capillary electrophoresis system (PFCE). Magnusdottir et. al. in "Electrohydrodynamically Induced Aggregation During Constant and Pulsed Field Capillary Electrophoresis of DNA" (Biopolymers, Vol 49, 385-401, 1999) describe a PFCE system. Although these pulsed-field single capillary electrophoresis have been shown to measure DNA fragments up to sizes of 200,000 base pairs, the throughput is limited to one sample per run. Even though the run times of capillary pulse field electrophoresis can be from less than 20 minutes to an hour, sample loads of hundreds of samples may take several hours to days to run because of the throughput restraints of a single capillary system.

The methods that have been used for pulsed-field capillary electrophoresis have relied generally on the application of simple, single alternating waveforms, for example a square wave or a sine wave applied at fixed or varying frequencies, or with different duty cycles, with a forward voltage time differing in from the reverse voltage time. Although these single-waveform methods with fixed or varying frequencies often give acceptable results when analyzing individual DNA fragments, which give sharp electropherogram peaks, these methods will not generally give accurate results when complex DNA agglomerates or DNA smears are run. DNA agglomerates or smears are broad, ill-defined peaks that are very sensitive to the pulsing methods utilized. Sizing results obtained with simple single waveforms on a pulse-field capillary electrophoresis system may give results that are significantly different than results obtained using standard Pulse Field Slab Gel Electrophoresis (PFGE). For example, the average smear size for a DNA smear measured with a single-frequency square-wave capillary electrophoresis system is usually at least 10-20% smaller than what is measured on standard pulsed-field slab electrophoresis systems. Also, simple single waveform methods, when applied to complex DNA mixtures, often result in anomalous system peaks that don't accurately represent the sample under analysis.

There is thus a need for pulse-field capillary electrophoresis systems that can run multiple samples simultaneously, and that can analyze broad DNA-smears and generate gel images or electropherograms that are equivalent to those obtained with standard Pulsed-Field Gel Electrophoresis (PFGE)

Multiplex capillary electrophoresis is known. For example, Kennedy and Kurt in U.S. Pat. No. 6,833,062 describe a multiplex absorbance based capillary electrophoresis system and method. Yeung et al. in U.S. Pat. No. 5,324,401 describe a multiplex fluorescent based capillary electrophoresis system. Although these systems offer the advantage of analyzing multiple samples simultaneously, and can run several plates sequentially, they lack the ability to load or change multiple sample plates while the system is running, and they also lack a simple workflow for efficient sample analysis. Furthermore, these multiplex systems lack the ability to measure nucleic acid fragment sizes above about 50,000 bp.

A limitation of prior-art pulsed-field capillary electrophoresis systems is the lack of an option for environmental temperature control. Temperature can affect run-to-run performance and the long-term reliability of capillary pulse-field systems. Thus, there is a need for a multiplex pulsed-field capillary electrophoresis systems that have an option for carefully controlled environmental temperature control.

While existing commercial CE systems can be automated with a robotic system, stand-alone systems are not fully automated or lack the sensitivity and data quality required for adequate DNA library analysis. An example of a CE instrument with a robot-capable interface is given by Kurt et al. in U.S. Pat. No. 7,118,659. For the construction of DNA libraries, as well as other applications such as mutation detection, it is often necessary to run thousands of samples per day, but the implementation of a robotic system for sample handling is prohibitively expensive, and many labs lack the expertise necessary for the maintenance and operation of sophisticated robotic systems. Automated forms of micro-slab-gel electrophoresis have been developed, such as those described in United States Patent Application number 20100126857. These allow for automatic analysis of multiple samples, but the techniques either still require significant human intervention, or they do not have the throughput required for high-volume applications. Amirkhanian et al. in U.S. Pat. No. 6,828,567 describe a 12-channel multiplex capillary electrophoresis system capable of measuring up 12 samples at a time using multiplex capillary electrophoresis. However, this system is not capable of measuring multiple 96-well plates, and does not have the workflow that allows the analysis of thousands of samples per day. WO 03/062810 A1 discloses creating fractionation rachet for electrophoresis, useful particularly in analysis of DNA sequences, by applying pulsed electrical field to fractionated sample and varying a plurality of pulses of the electrical field repeatedly.

As can be seen, there a need for an automated capillary electrophoresis system that a) eliminates the complexity, cost, and required expertise of a robotic system b) enables users to run from one to several thousand samples per day c) allows users to conveniently load several plates or samples onto a capillary electrophoresis system while the system is running other samples d) has the small size and footprint of a stand-alone capillary electrophoresis unit and e) allows users to accurately determine the size of DNA fragments larger than 50,000 bp, and preferably larger than 100,000bp.

This invention has, as a primary objective, the fulfillment of the above described needs.

### BRIEF SUMMARY OF THE INVENTION

The present disclosure relates to a pulse-field capillary electrophoresis system with the ability to apply a varying or pulsed electric field to at least 2 and preferably at least 12 capillaries simultaneously.

The present invention includes application of complex waveforms, which is defined as the application of sequences of simple waveforms that are iterated for the duration of the analytical run.

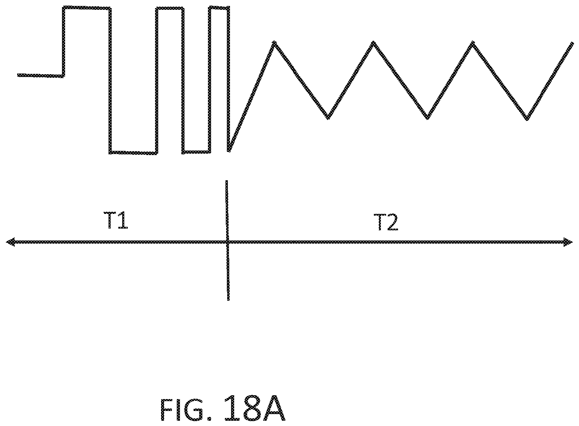

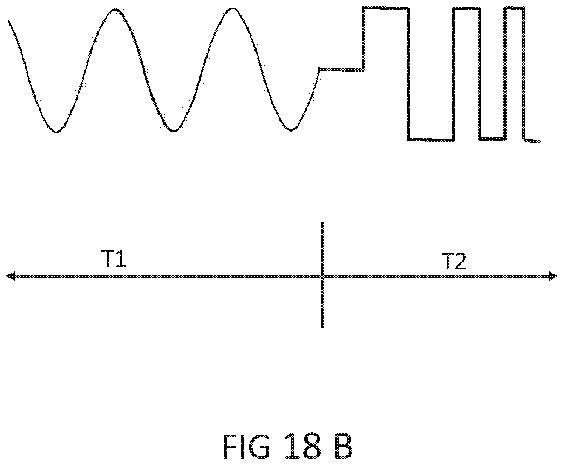

A preferred method for obtaining high-quality separations of complex DNA smears using multiplex pulsed-field parallel capillary electrophoresis is to apply different variable voltage waveform patterns, in sequence, over time, in repeated iterations. For example, a preferred separation method is to apply a square wave for a period of time followed by a triangle wave for a period of time, and then repeating the square-wave and triangle wave sequence for several iterations. This is shown in FIG. **18A****,** with a square wave applied for a period of time, T1, followed by a triangle wave, applied for a period of time, T2. In the case shown in FIG. **18A****,** the frequency of the applied square wave varies from slow to fast, while the frequency of the triangle wave is constant. FIG. **18B** shows a sine wave (fixed frequency) applied for a period of time, T1, a followed by a square wave of varying frequency for a period of time T2. The T1 + T2 sequence is iterated for "T" times to obtain a total run time of I(T1+T2) minutes. Another example is to apply a square wave for a period of time followed by a constant voltage for a period of time, and then iterating the square-wave and constant voltage sequence for several iterations. Another preferred aspect of the invention is to apply at least three different waveforms over the period of the electrophoresis separation. For example, the application of a triangle wave, followed by a square wave, followed by a sine wave, with the sequence of the three waveforms iterated multiple times. Another preferred aspect of the invention is to iterate two different waveforms, followed by a third waveform. For example, the application of a triangle wave, followed by a square wave, the sequence of which is iterated several times, followed by the application of a square wave for a fixed period of time. Another example is to apply a square wave, for a first period of time, a constant voltage for a second period of time, and triangle wave for a third period of time, in sequential segments, and iterate the sequence multiple times until the electrophoresis run is complete.

The invention is defined in the appended claims. One embodiment of the invention is a method of applying an electric field across at least two capillaries, comprising; applying a first pulse-field waveform at a first frequency across said capillaries for a first period of time; applying at least a second, different shape pulse-field waveform at a second frequency across said capillaries for a second period of time; and thereafter repeating the said first and at least second pulse-field waveforms at least twice; wherein said first frequency varies with time within said first period of time and said second frequency varies with time within said second period of time.

### BRIEF SUMMARY OF THE DRAWINGS

FIG. **1** shows a left-front-view of the instrument, with 6 drawers for holding sample and buffer plates.
FIG. **2** shows a right-front view of the instrument with one drawer pulled out for placement of a buffer plate and the top and side door compartments open.
FIG. **3** shows the x-z stage assembly.
FIG. **4** shows a drawer, stage assembly, tray holder, and sample plate.
FIG. **5** shows the bottom of a tray holder.
FIG. **6** shows a right-side view of the instrument without the cover.
FIG. **7** shows the left-side view of the instrument without the cover.
FIG. **8** shows a capillary array cartridge
FIG. **9** shows the flow-chart for the software control program for creating a queue of jobs.
FIG. **10** shows a computer screen image of the computer software.
FIG. **11** shows the positioning of a sample plate under the array by the stage.
FIG. **12A** shows a view of the capillary electrophoresis reservoir system.
FIG. **12B** shows a view of the capillary electrophoresis reservoir system.
FIG. **13A** shows a view of the x-z stage relative to the drawers.
FIG. **13B** shows a view of the x-z stage with a sample tray lifted.
FIG. **14** shows a back view of the instrument with a pulse-field power supply.
FIG. **15A** shows a top view of the instrument with a temperature control chamber.
FIG. **15B** shows a cutout view of the temperature control chamber.
FIG. **16A** shows a prior-art slab-gel separation of Marker 7GT
FIG. **16B** shows the separation of Marker 7GT using prior-art capillary electrophoresis with constant applied electric field.
FIG. **16C** shows the separation of Marker 7GT using the capillary electrophoresis system with a pulsed applied electric field.
FIG. **17A** shows the separation of Marker 7GT using both a pure square wave (bottom trace) and a mixed square/triangle wave (top trace).
FIG. **17B** shows an electropherogram of a DNA smear analyzed with an iterated mixed wave sequence, compared with the electropherogram of the same DNA smear analyzed with a pure square wave.
FIG. **18A** shows an example of a square wave applied for a period of time T1, followed by a triangle wave applied for a timeT2
FIG. **18B** shows an example of a sine wave applied for a period of time T1, followed by a square wave applied for a time of T2.

### DETAILED DESCRIPTION OF THE INVENTION

Described is a multiplexed pulsed-field capillary electrophoresis system with enhanced workflow. The capillary electrophoresis system and apparatus of the present disclosure includes an absorbance or fluorescence-based capillary electrophoresis sub-system with a light source, a method for carrying light from the light source to the sample windows of a multiplex capillary array containing at least 12 capillaries (preferably 96 capillaries), and a method for detecting light emitted (fluorescence) or absorbed (absorbance) from the sample windows of a multiplex array. The sub-system also includes a method for pumping buffers and gels through the capillaries, as well as a method for application of an electric field for electrophoretic separation. The optics of the fluorescent-based sub system are described by Pang in United States Patent Applications 20070131870 and 20100140505. The optics of an applicable absorbance-based system, as well as the fluid handling, reservoir venting, application of electric field, and selection of fluids via a syringe pump and a 6-way distribution valve are discussed by Kennedy et al. in U.S. Pat. Nos. 7,534,335 and 6,833,062.

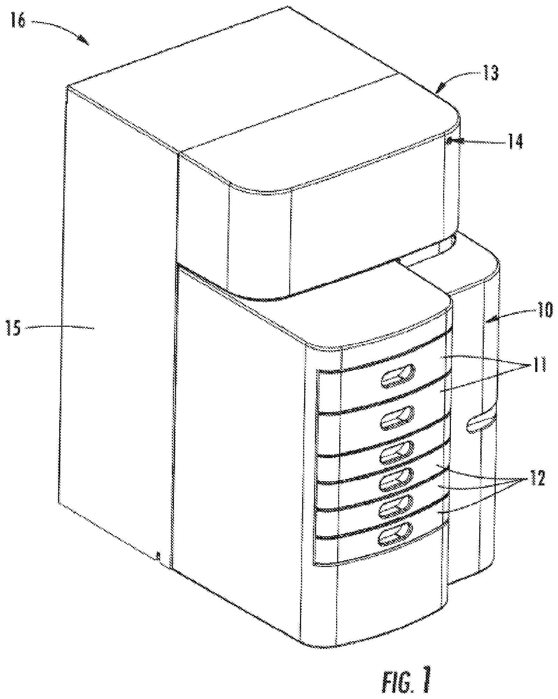

Referring to FIG. **1** the multiplex capillary system and/or console **16**, with enhanced workflow has a door **10** for easy access to the loading of gels, two drawers **11** for the easy loading of a buffer tray and a waste tray. Drawers **12** can be opened for easy loading of 96 well PCR plates, tube strips, vials, or other sample containers. A top door **13** can be opened to access a replaceable capillary array, array window, and reservoir. An indicator light **14** is used to for notifying users of the active application of a high-voltage for electrophoresis. A removable back-panel **15** allows access to electronics such as a high-voltage power supply, electrical communication panels, a pump board, pressure transducer board, and stage driver electronics. The back panel **15** also allows maintenance access to the x-z stage, which is used to move sample trays from the drawers **11** and **12** to a capillary array.

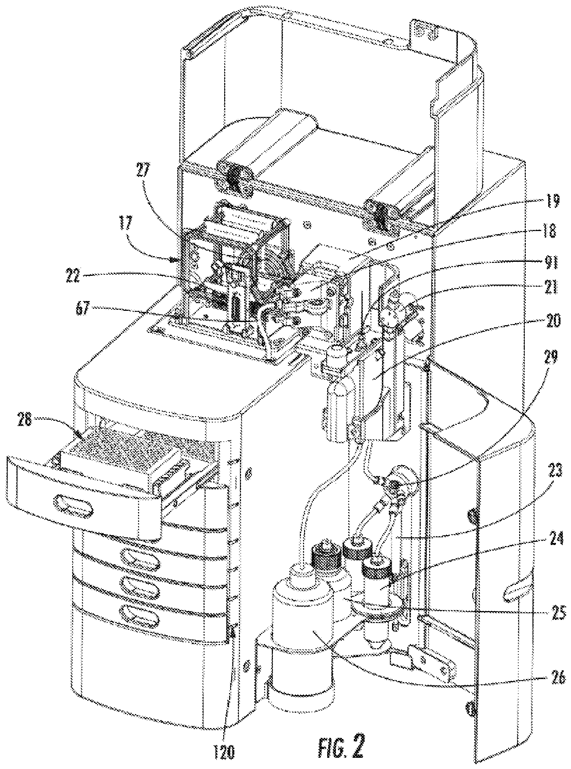

FIG. **2** shows the multiplex capillary system used with the enhanced workflow console **16** with the top and side doors open. A replaceable capillary array **17** holds either 12 or 96 capillaries for multiplex capillary electrophoresis. An LED light guide **67** guides light from a LED engine located in the back compartment to the array window block **22** which is inserted between the array window holder **19** and LED light guide and window holder **18.** In this view, array window block **22** is attached to the capillary array **17** for display. When the capillary array is removed, from the system, the array window block **22** can be attached to the capillary array **17** (as shown). When the capillary array is fully installed, the array window block **22** is not visible because it is sandwiched between the array window holder **19** and LED light guide and window holder **18.** A vent valve **21** is connected to the top of a capillary reservoir **20.** A syringe pump **23** coupled with a 6-way distribution valve **29** delivers fluids and electrophoresis gels from fluid containers **24** and **25** into the capillary reservoir **20,** waste container **26,** or capillaries in the capillary array **17.** A fan **27** is used for forcing cool air from the back compartment through the capillary array **17**, past the outside of the reservoir **20**, down past the fluid containers **24**, **25** and finally out the bottom of the instrument. LED indicator lights **120** are used to indicate the presence or absence of trays in the drawers. A buffer tray **28** is shown in a drawer (**11**, FIG. **1**). The capillary array reservoir tip **91** is shown inserted into the reservoir **20.**

The concepts and practical implementation of motion control systems are known. For example, Sabonovic and Ohnishi; "Motion Control" John Wiley and Sons, 2011, discusses practical methods for the design and implementation of motion control. It does not, however, show an enhanced CE workflow console **16** as depicted here.

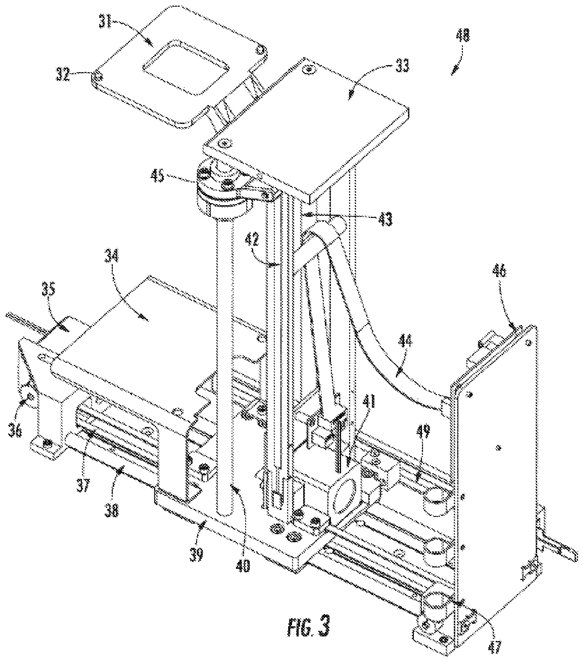

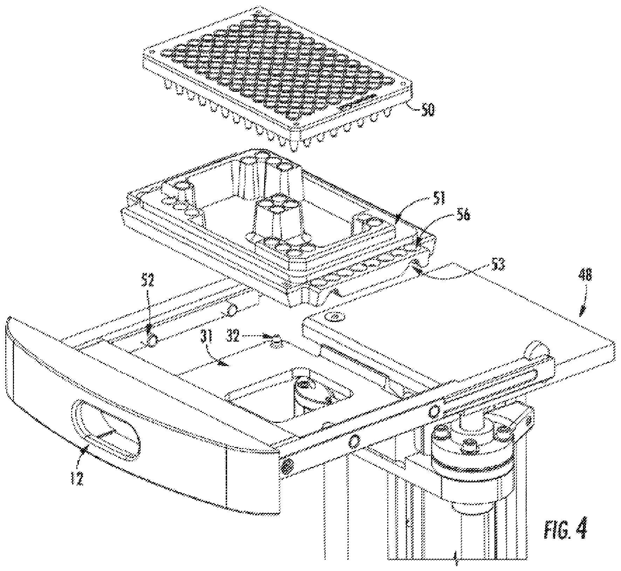

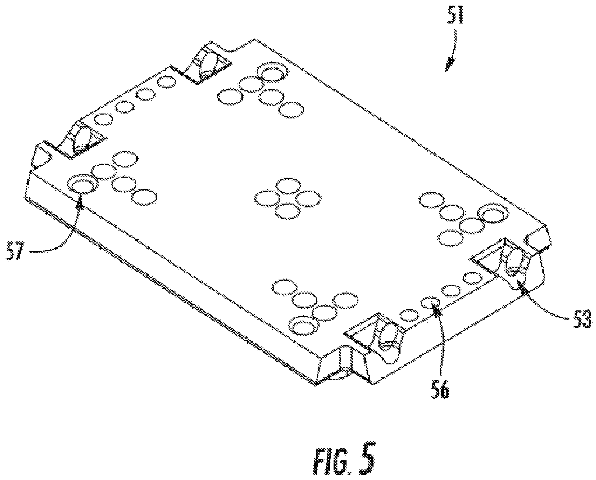

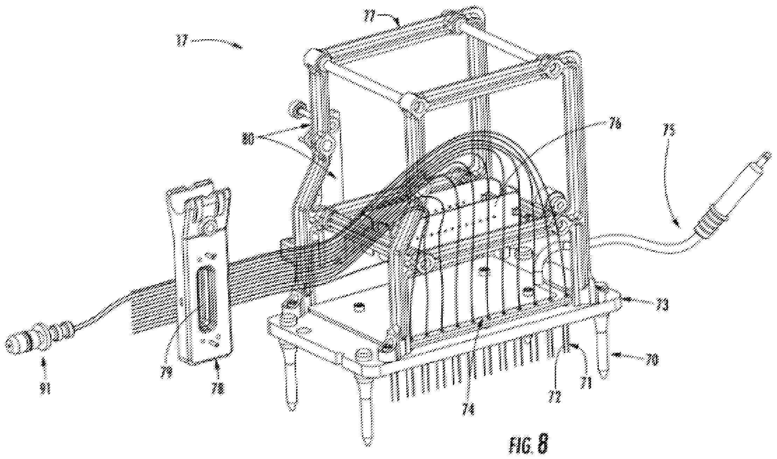

FIG. **3** shows the x-z stage assembly **48**, which is used to transport sample trays (**50**, FIG. **4**) and associated tray holders (**51**, FIG. **4**) from the drawers (**12** FIG. **1**) to the injection capillaries (**72**, FIG. **8**) and injection electrodes (**71**, FIG. **8**) of the capillary array (**17**, FIG. **8**). The x-z stage assembly **48** is also used to position a buffer tray or waste tray (**28**, FIG. **2**) from the drawers (**11**, FIG. **1**) to the injection capillaries and electrodes of the capillary array (**72**, FIG. **8**). The x-z stage assembly has a tray carrier **31** with alignment pins **32**, which align with holes (**57**, FIG. **5**) on the bottom of the tray holder (**51**, FIG. **4**) to prevent subsequent sliding or movement of the tray holders during transport. A protective cover **34**, made of metal or plastic, is used to prevent gels or other liquids from spilling onto the x-direction guide rails **38** and x-direction drive belt **37** of the stage assembly. An x-drive stepper motor **35** is used as the electro-mechanical driver for motion in the x-direction. A drive pulley **36** is attached to the stepper motor **35** and x-direction drive belt **37** which drives the stage carrier **39** back-and forth along the guide-bars **38.** A second drive pulley (not shown) is used on belt **37** towards the back-end of the stage, which allows the belt to make a full loop when affixed to stage carrier **39.** Any motor-induced movement of the belt induces an x-direction movement of the stage carrier **39** on the guide rails **38.** A stepper-motor for the z-position is located at **41**, which is attached to a drive pulley/belt configuration similar to that shown in the x-direction. The x-direction drive belt is shown as **43.** The z-position motor/pulley/belt is used to move the tray carrier **31** up and down the guide bars **40.** Top plate **33** serves as a structural support for the guide bars **40.** An electrical communication strip **44** is used to communicate between an electrical motor control board **46** and the stepper motors **41** and **35.** An x-direction membrane potentiometer strip **49**, along with appropriate control electronics, is used to determine and control the absolute position of the stage carrier **39** in the x-direction. A z-direction membrane potentiometer strip **42**, along with appropriate control electronics, is used to determine the absolute position of the tray carrier **31** in the z-direction. Linear encoders or rotational encoders (on the stepper motor) are alternative forms of positional measurement and control. Bearings **45** are located on each guide bar **40** and guide rail **38** to enable friction-free movement of both the tray carrier **31** and the stage carrier **39.** Note that there are two guide bars or guide rails per axis. Electrical cord guide straps **47** are attached to a back support, which also holds the electrical control board **46** for the x-z stage assembly.

FIG. **4** shows a drawer **12**, superimposed on an image of the stage assembly **48**, tray holder **51**, and 96-well sample tray **50.** The tray holder **51** is molded to specifically hold a 96-well plate, shown here as **50.** Alternative moldings of the tray holder allow for different sample plates, including 384-well plates. Holes (**57**, FIG. **5**) on the bottom of the tray holder **51** align with the alignment pins **32** of the tray carrier (**31** FIG. **4**). Notches **53** in the tray holder **51** align with alignment pins **52** on the drawer **12** to enable the tray holder to fit in a tight, reproducible way within the sample drawer.

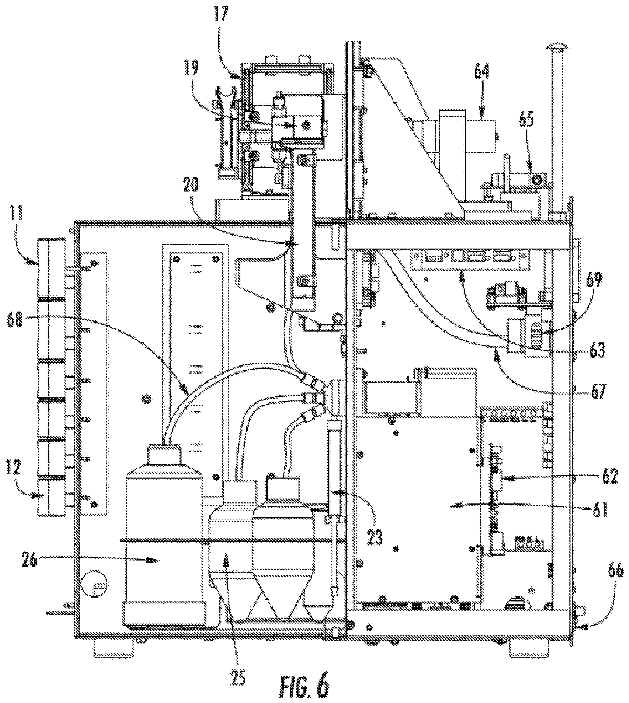

FIG. **6** Shows a right side view of the electrophoresis system, with a chassis **66**, pump motor and control system **61**, pump control board **62**, LED light engine **69**, LED light line **67**, high voltage power supply board **65**, capable of applying 0.0 kV to 15 kV across the electrodes of the array, a CCD camera **64**, capillary array cartridge **17**, array window holder **19**, reservoir **20**, drawers **11**, drawers **12**, fluid lines **68**, waste container **26**, gel containers **25** and syringe **23**. A USB electronic distribution bard is shown as **63.**

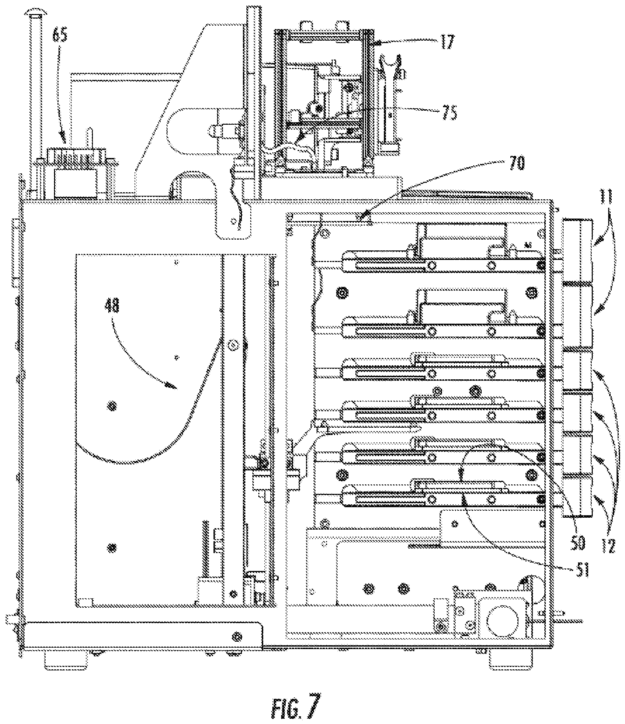

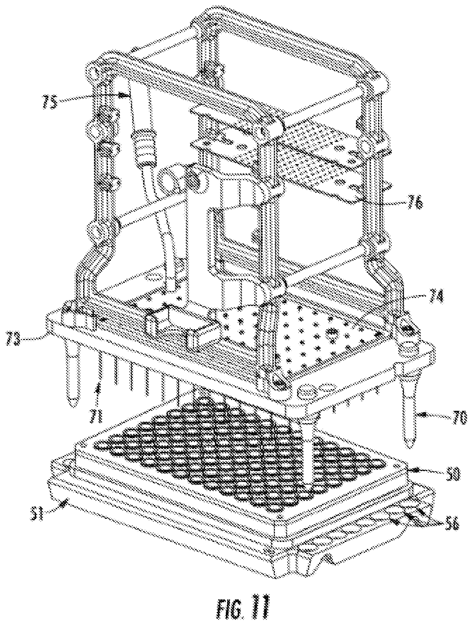

FIG. **7** shows a left side-view of the electrophoresis unit showing the x-z stage assembly **48**, which moves tray holders **51** and sample trays **50** from a drawer **12** or **11** to the bottom of array **17.** The stage unit **48** can move the sample tray holder **51** and sample tray **50** up in the z-direction to lift the tray holder/sample tray off of the drawer, move back in the x-direction away from the sample drawers, and then move the sample plate up in the z-direction to the bottom of the capillary array **17.** After electrokinetic or hydrodynamic injection, the stage unit **48** can move the sample tray holder/sample tray back down to the target drawer position (down in the z-direction), move forward in the x-direction just above the sample plate, and then drop down in the z-direction to set the sample tray holder/sample tray onto the drawer. When the sample tray holder **51** is resting in a drawer, the back edge of the sample tray holder **51** and sample tray **50** are aligned so that they do not lie directly underneath the array **17.** This allows the sample stage tray carrier (**31**, FIG. **3**) to move up and down along the entire z-axis with a tray holder/sample tray without colliding into other tray holders/sample trays in the drawers. The alignment pins (**70**, FIG. **8**) on the bottom of array **17** are used to align the tray holder with a tray so that the capillary and electrode tips dip into each sample well of the sample plate and do not collide with other areas of the sample plate. This is shown in more detail in FIG. **11**, which shows a sample tray holder **51** with a sample tray **50** aligned underneath a capillary array. Alignment holes **56** on the tray holder **51** force the alignment of the tray holder with the capillary array alignment pins **70**.

FIG. **7** also shows high voltage power supply board **65** and high voltage power supply cable (to the array) **75.**

FIG. **8** shows an array cartridge **17**, with rigid plastic support structure **77**, window storage and transport screw **80**, capillary support cards **76**, high voltage power supply cable **75**, and insulating support structure **73** onto which the electric circuit board **74** is placed. Electrodes, **71** protrude through the electric circuit board **74**, through the insulating support structure **73**, and protrude through the bottom of the array. The electrode material is stainless steel or tungsten. The electrode dimension, which is not a critical aspect of the invention, is 50 mm diameter by 29 mm length. The protrusion from the bottom of the cartridge base is 20.0 mm. The electrodes are soldered onto the circuit board **74.** The high voltage power supply cable **75** is also soldered to the same circuit of the electrical circuit board, which enables contact of the electrodes **71** with the high voltage power supply (**65**, FIG. **6**). Capillary tips **72** are threaded through the electric circuit board **74** and insulated support structure **73** and are aligned immediately adjacent and parallel to the electrode tips. The distance between the capillary tips and electrodes are from 0.1 mm to 4 mm. The ends of the capillaries and the ends of the electrode lie in a single plane (i.e. the capillary tips and electrode tips are the substantially the same length, with length variation of no more than about +/-1 mm. Preferably, the length variation of capillary tips and electrode tips is less than 0.5 mm. The capillaries thread through the bottom of the capillary array, through the insulating support structure or load header **73**, through the electric circuit board **74**, through the capillary support cards **76** (which are supported by the rigid plastic support structure **77**) through the capillary window holder **70** with capillary windows **79** centered in the opening of the window holder, and then finally through the capillary reservoir tip **91**, in which all capillaries (in this case **12**) are threaded through a single hole. For 96 capillary arrays, capillaries are threaded in groups of 12, or preferably groups of 4 in the capillary reservoir tip **91** The capillaries are held in place in the reservoir tip **91** with an adhesive, such as a thermally or uv-curable epoxy.

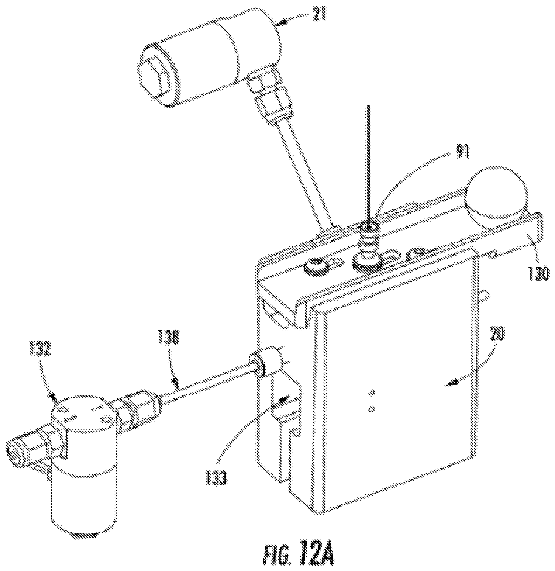

FIG. **12A** shows the reservoir, with reservoir body **20**, capillary reservoir tip **91**, slider bar **130** (for locking capillary reservoir tip into the reservoir, through alignment of a notch on the capillary reservoir tip **91** and the slider bar **130**), vent block valve **21**, waste tube out **138**, waste block valve **132**, and pressure transducer cavity **133**.

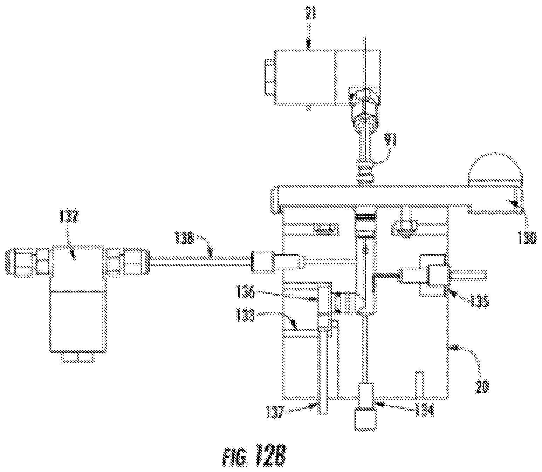

FIG. **12B** shows an alternate cut-out view of the reservoir, with reservoir body **20**, capillary reservoir tip **91**, slider bar **130**, vent block valve **21**, waste tube out **138**, waste block valve **132**, electrode for attachment to ground **135**, pressure transducer cavity **133**, pressure transducer **136**, pressure transducer cable for attachment to analog/digital board **137**, and fluid tube input **134** (from syringe pump **23** FIG. **2**).

The reservoir body can be made of any solid material such as acrylic, Teflon, PETE, aluminum, polyethylene, ABS, or other common metals or plastics. The key criterion is that the material is durable and chemically resistant to the materials used. A preferred material is acrylic or Teflon.

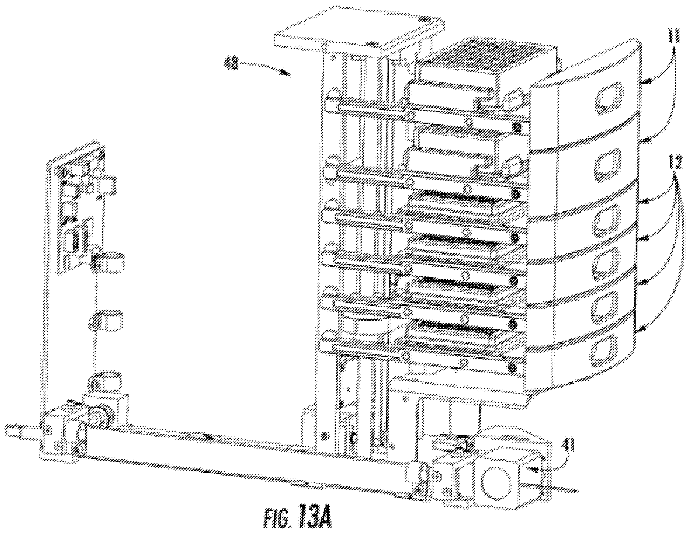

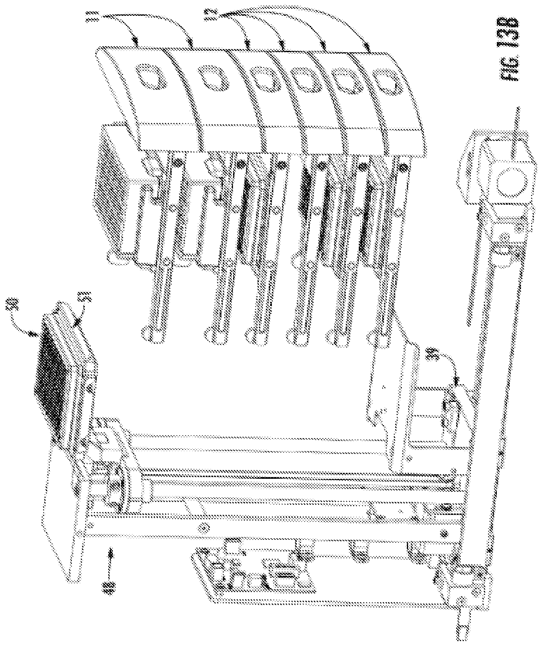

FIG. **13A** shows the x-z stage unit **48** in relation to the drawers **11** and **12.** The x-z stage is located directly behind the drawers, and can move the stage carrier (**39**, FIG. **13B**) back-and forth in the x-direction using the stepper-motor for the z-position **41**. A sample tray is removed from a drawer by first moving the stage forward, towards the drawers, in the x-direction. The tray carrier (**31**, FIG. **3**) lifts a tray holder up and off a drawer in the z-direction using the z-direction stepper motor (**41**, FIG. **3**). The stage carrier is then moved back in the x-direction, away from the drawers, as shown in FIG. **13B**. The stage carrier **39** is then moved up in the z-direction to move the tray holder **51** and sample tray **50** to the injection position of the capillary array (FIG. **11**).

A typical strategy for pumping fluids for capillary electrophoresis is as follows. Consider the following 6 positions of the six-way distribution valve (**29**, FIG. **2**) on the syringe. Position 1 is connected to the bottom of the reservoir (**134**, FIG. **12B**); position 2 is connected through a tube to a bottle of conditioning fluid (a fluid for conditioning the walls of the capillaries); position 3 is connected to a "Gel 1" which is used for the analysis of genomic DNA, position 4 is connected to a "Gel 2" which is used for the analysis of fragmented DNA, position 5 is unused, or optionally used to clean the vent valve via the pumping of air through the vent valve to the waste bottle and position 6 is connected to the waste bottle.

Step A: The reservoir is first emptied by opening position 1 (reservoir), filling the syringe with fluid that is in the reservoir, closing position 1, opening position 6, and emptying fluid to the waste. This is repeated until the reservoir is empty. Block valves **21** and **132** are kept open during this process to enable efficient draining of the reservoir.

Step B: The reservoir is then filled with conditioning solution by opening position 2, filling the syringe with conditioning solution, closing position 2, opening position 1, and filling the reservoir with conditioning solution. Block valve **21** is closed, but block valve **132** to waste is open, enabling the over-filling of the reservoir with conditioning solution.

Step C: The capillaries are filled by closing both vent block valve **21** and waste vent valve **132.** The syringe is filled with capillary conditioning solution. Position 1 is opened, and fluid is pressure filled through the capillaries at a minimum of 100 psi (690 kPa) for a predetermined time, which may range from 1 minute to 20 minutes.

Step D: The reservoir is emptied by step A, and then re-filled with gel using the same process as in Step B, except that position 3 for the gel is used on the 6-way distribution valve.

Step E: The capillaries are filled with gel using a process analogous to Step C.

After steps A-E, the capillaries are ready for electrophoresis.

A general strategy and process for analyzing samples using electrophoresis is as follows.

Samples are placed into a 96-well plate for analysis. The user places the sample plate into a sample drawer (**12**, FIG. **1**), and then adds jobs to a computer-based queue, corresponding to the analysis of a specific row or the entire sample plate in the drawer. The computer, which is the control system of the instrument, executes the analysis of the row or entire tray of interest.

Described is the workflow of the capillary electrophoresis system. Drawers (**11**, FIG. **1**) allow easy placement of buffer and waste trays into the system. Drawers (**12**, FIG. **1**) allow easy placement of sample trays into the system. Of particular importance is the ability to place or remove sample trays from drawers (**12**, FIG. **1**) while the system is performing capillary electrophoresis. Indicator lights (**120**, FIG. **1**) show if a tray is present or absent in a drawer, which let users know if a drawer is in place. A typical workflow for a **12**-capillary multiplex system is as follows: User A walks up to the machine with sample tray 1, and places it into the third drawer from the top (one of drawers **11**, FIG. **1**). User "A" then fills a queue with three jobs, which correspond to performing capillary electrophoresis on the three rows of samples: sample tray 1 row A, sample tray 1 row B, and sample tray 1 row C. User "A" then instructs the computer to execute the queue, and as a result, the system begins capillary electrophoresis of sample tray 1, row A, and will continue executing jobs in the queue until there are no more jobs. User "B" then comes up and places sample tray 2 into the fourth drawer from the top (one of drawers **11**, FIG. **1**). User "B" then adds 8 jobs to the queue corresponding the performing of capillary electrophoresis on 8 rows of samples: sample tray 2, rows A-H. The computer will continue analyzing user "A" samples until they are finished, and then continue on with the analysis of user "B" samples. In the meantime, user "C" walks up and loads sample tray 3 into the fifth drawer from the top (one of drawers **11**, FIG. **1**). User "C" then adds 1 job to the queue corresponding to the analysis of 1 row of samples: sample tray 3, row A. This process can continue indefinitely, as long as there is sufficient gel in gel containers (**25** in FIG. **2**), or if there is sufficient run buffer in the buffer tray (**28**, FIG. **2**) located in top drawer **11**, FIG. **1**.

Also disclosed is a computer program that enables users to load a sample plate into the desired vertical drawer (**12**, FIG. **1**), and instruct the system to run the desired rows or entire sample plate, while the system is running other samples. This allows multiple users to load samples and/or sample plates, or a single user to load multiple samples and/or sample plates without first having to wait for the electrophoresis of other samples to be complete.

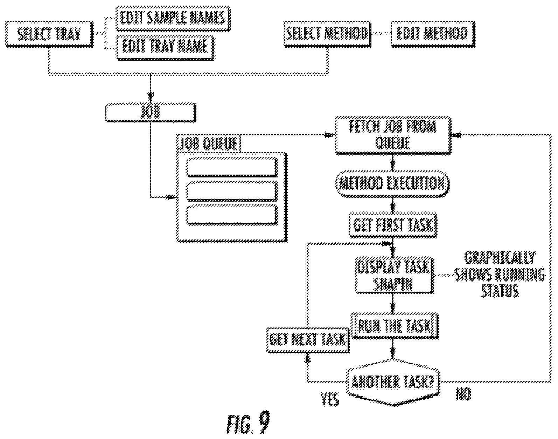

FIG. **9** shows the general flow diagram of the work process and computer program. A user loads a sample tray into a drawer (**12**, FIG. **1**) of the system. On the computer, user then selects the tray, edits sample names and/or tray name. User further selects or defines a method (time of separation, electric field used for separation, gel selection, etc.). This selected tray, along with an associated method is defined as a "job", which is then placed into a queue. The computer as an instrument control device, fetches jobs from the queue, and controls the instrument for every task, including operation of the syringe pump, operation of the high voltage power supply, and the motion control stage (**48**, FIG. **3**). For each run (or job), there may be a variety of tasks, with each task requiring direct command and control of subunits of the system. Tasks associated with control of the syringe pump include emptying/filling the reservoir with conditioning fluid, forcing conditioning fluid through the capillaries, emptying/filling the reservoir with gel, forcing gel through the capillaries. Tasks associated with control of the x-z stage may include moving or removing a waste tray to/from the inlet capillaries and electrodes of the capillary array, moving or removing a buffer tray to/from the inlet capillaries and electrodes of the capillary array, or moving/removing a sample tray to/from the inlet capillaries and electrodes of the capillary array. Tasks associated with control of the high voltage power supply include turning off/on a high voltage for capillary electrophoresis separation. Other tasks are associated with the camera (acquisition of data), and block valves. For each set of samples, the program will complete all tasks required to obtain a set of electropherograms. Once these tasks are complete, the program fetches another job from the queue. If the queue is empty, all sample runs are complete (until the user initiates another queue).

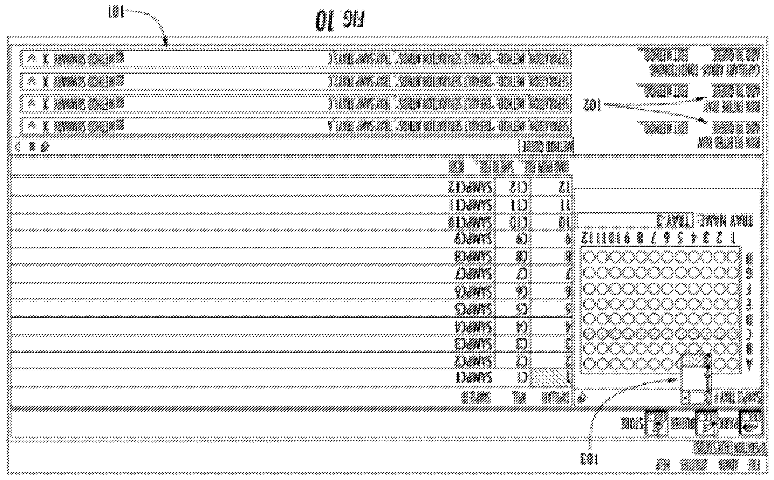

The graphical result of this computer program is shown in FIG. **10**, which shows a list of samples to be analyzed in queue **101**, an option to add rows or trays to the queue **102**, and an option to select the tray number for analysis **103**. It is these three aspects that are critical to software portion of the disclosure: a) Selection of tray **103** (corresponding to a drawer **11** FIG. **1**) b) Adding the sample set to a queue (**102**, FIG. **10**) and c) A queue of active samples for analysis (**101**, FIG. **10**), which are executed in sequence until all jobs are complete. Another critical aspect is the ability to add samples to instrument drawers (**11**, FIG. **1**) and queue (**101**, FIG. **10**) while the instrument is running other samples.

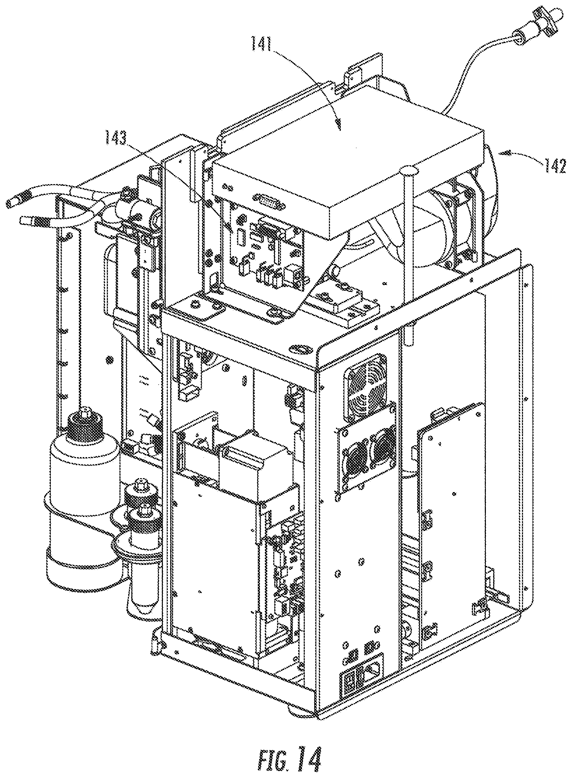

FIG. **14** shows a back view of the instrument with a pulse-field high voltage (HV) power supply **141**, control electronics **143**, and a cooling fan **142** to remove heat generated by the power supply. Pulsed field voltage power supply **141** with cooling fan **142** replaces constant-field power supply **65** shown in FIG. **6****.** A preferred pulse-field power supply is a Ultravolt^{™} 20HVA24-BP2 ,15HVA24-BP2 , or 1 0HVA24-BP2. The output of the power supply is controlled by a control board **143** with variable control voltage. A non-limiting example is a variable control voltage range between plus 10V and minus 10V. The plus 10 V and minus 10 V is scaled to the output of the power supply. For a 10 kV power supply, the application of a plus 10 V control voltage delivers plus 10kV from the power supply, whereas the application of a minus 10V control voltage delivers minus 10kV from the power supply. An application of plus 5 V to this same 10 kV power supply results in an output voltage of plus 5kV. For a 20 kV power supply the application of a plus 10V control voltage delivers a plus 20 kV from the power supply, whereas an application of plus 5 V results in plus 10 kV voltage from the power supply. The control voltage and the associated scaling factor linked with the output of the pulsed-field power supply may be different than the example described above, and is not a critical component of the invention. A waveform generator, which is also a part of control board **143**, produces the complex waveforms that result in the variable voltage output of the pulsed-field power supply. For example, a plus 7V/minus 4V 10 Hz square wave on the control voltage results in a plus 7kV/minus 4kV 10 Hz (Pulse Power) output of the HV pulse power supply. The output one end of the pulsed HV power supply is attached to a multiplex capillary array circuit board **74** through HV power supply cable **75** as shown in FIG. **8****.** The output of the return path of the pulsed HV power supply is attached to the outlet electrode (electrode on the reservoir side of the capillaries), which is also connected to ground **135** FIG. **12B****.**

Also disclosed is the application of a pulse-field power supply to a multiplex capillary electrophoresis system containing at least two and preferably 12 capillaries, so that all capillaries of the multiplex capillary array receive approximately the same pulsed electric field. Another example includes the application of a pulse-field power supply to a capillary electrophoresis system containing at least 24 capillaries. An on-board processor is used to generate waveforms for the control voltage of any desired shape (square, sine, triangle, sawtooth, etc.). The frequency of the waveform can vary anywhere from < 1 Hz to 100 Hz. A preferred frequency range is from 1 Hz to 50 Hz. Another preferred range is from 1 Hz to 20 Hz. An especially preferred range is from 2 Hz to 10 Hz. The control board **143** also has voltage and current monitoring circuitry, so that the voltage applied to the capillary electrophoresis system is actively monitored.

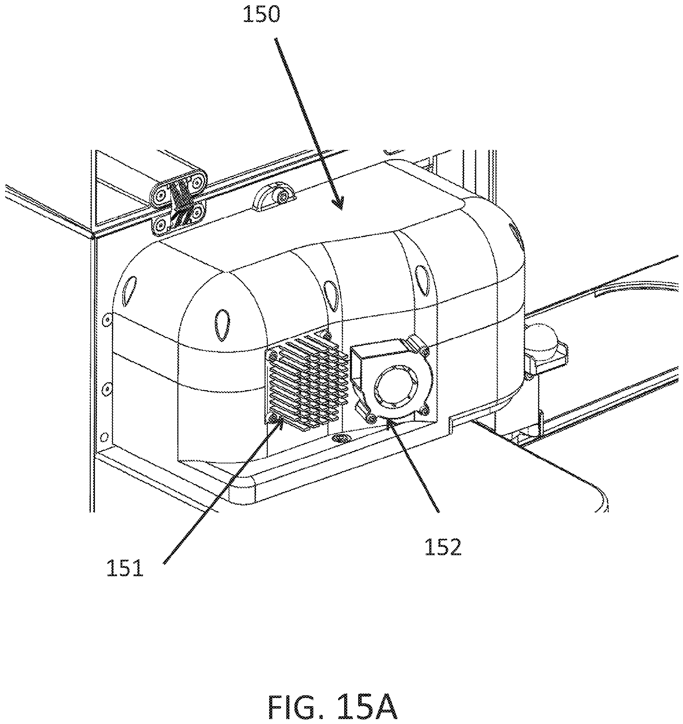

FIG. **15A** shows a top view of the instrument with a temperature control chamber **150** with a Peltier cooler **151** and a fan **152** for removing the external heat generated by the Peltier cooler. An example Peltier Cooler is CP14,127-045 (part number 66101-500) made by Lair Technologies.

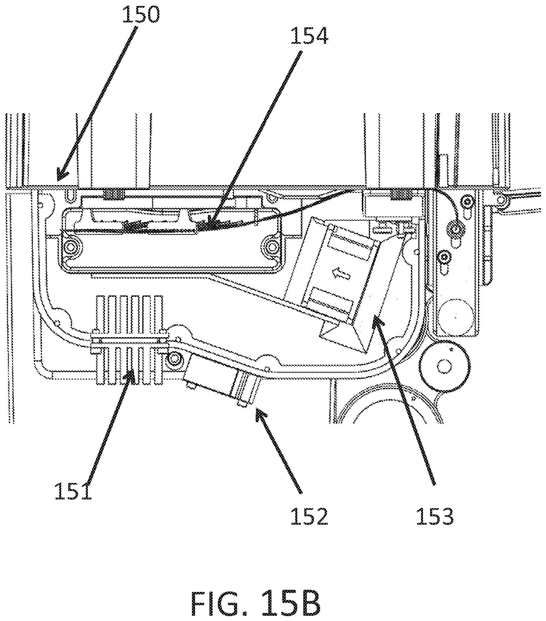

FIG. **15B** shows a top view of the instrument with the temperature control chamber **150** with a cutout view, showing the capillary array **154**, and internal heating element and air fan **153**, which when combined with Peltier cooler **151** enables precise control of the temperature from 10 C to 25 C.

### ITERATED WAVEFORMS

For the purposes of this specification, the term "applied waveforms" is equivalent to "applied electric fields". Applying varying pulse-field waveforms across at least two capillaries is identical to applying a pulse-electric field across at least two capillaries.

To better describe varying field waveforms, the following terms are used in this specification:
Common waveforms are square, triangle, sine, and sawtooth, or any combination or blend of waveforms

Anode: a positively charged electrode relative to the cathode. The anode may be at a ground voltage, but positive relative to the cathode.

Cathode: a negatively charged electrode, relative to the anode. The cathode may optionally be at a ground voltage, but negative relative to the anode.

Higher pulse voltage: the highest applied voltage of an alternating or varying voltage, over a single cycle of the applied voltage.

Lower pulse voltage: the lowest applied voltage of an alternating or varying voltage, over a single cycle of the applied voltage.

Simple single waveforms are a single waveform shape applied with fixed frequencies and voltages, or optionally varying frequencies and voltages. For example, a simple waveform may consist of a pure sine-wave, with a frequency varying from 50 Hz to 10 Hz over a 60-minute period. A simple waveform may also have asymmetric applied voltage. An example is a square wave with an applied voltage of plus 3 kV to minus 7 kV. A simple waveform may also have varying voltages over time. For example, a sine wave may have higher pulse voltage that may ramp linearly from plus 10 kV to minus 3 kV over a period of time, T, while the lower pulse voltage may ramp linearly from minus 5 kV to minus 1 KV over the same period of time. Thus, the amplitude of the applied Sine wave varies with time. Simple waveforms may also have a forward direction pulse that is identical in time to the reverse-direction pulse. For example, a square wave with plus 5 kV forward pulse of 1 second and minus 6 kV reverse pulse of 1 second. Simple waveforms may also have a forward direction pulse that is different in time to the reverse-direction pulse. For example, a square wave with a plus 5 kV forward pulse of 2 second and minus 6 kV reverse pulse of 1 second.

A simple single waveform may also be a combination of two waveforms superimposed on top of each other to result in unique shape waveforms.

Simple waveforms may have a duration of the higher pulse voltage longer or shorter than the duration of the lower pulse voltage. The ratio of the length of one side of the pulse, relative to the total time of a pulse cycle, expressed as a percent, is often referred to or expressed as the "duty cycle" of the pulse. For example, a 50% duty cycle would define a higher pulse voltage time (T1) equal to a lower pulse voltage time (T2). The relative duty of the positive pulse is (T1*100/(T1+T2)). For T1 = T2, the duty cycle is 50%. For T1 1/3 the time of T2, the duty cycle is (1* 100/(1+3)) = 25%. Directional flow is achieved in electrophoresis by applying a higher pulse voltage longer the lower pulse voltage (or vice versa). For example, a plus/minus 5 kV 1 Hz square wave applied to an electrophoresis column may have 0.66 seconds at plus 5 kV and 0.33 seconds at minus 5 kV for a 66% duty cycle.

The present invention comprises the application of complex waveforms, which is defined as the application of sequences of simple waveforms that are iterated for the duration of the analytical run.

A preferred method for obtaining high-quality separations of complex DNA smears using multiplex pulsed-field parallel capillary electrophoresis is to apply different variable voltage waveform patterns, or simple waveforms, in sequence, over time, in repeated iterations. For example, a preferred separation method is to apply a square wave for a period of time followed by a triangle wave for a period of time, and then repeating the square-wave and triangle wave sequence for several iterations. This is shown in FIG. **18A****,** with a square wave applied for a period of time, T1, followed by a triangle wave, applied for a period of time, T2. In the case shown in FIG. **18A**, the frequency of the applied square wave varies from slow to fast, while the frequency of the triangle wave is constant. FIG. **18B** shows a sine wave (fixed frequency) applied for a period of time, T1, a followed by a square wave of varying frequency for a period of time T2. The T1 + T2 sequence is iterated for "I" times to obtain a total run time of I(T1+T2) minutes. Another example is to apply a square wave for a period of time followed by a constant voltage for a period of time, and then iterating the square-wave and constant voltage sequence for several iterations. Another preferred aspect of the invention is to apply at least three different waveforms over the period of the electrophoresis separation. For example, the application of a triangle wave, followed by a square wave, followed by a sine wave, with the sequence of the three waveforms iterated multiple times. Another preferred aspect of the invention is to iterate two different waveforms, followed by a third waveform. For example, the application of a triangle wave, followed by a square wave, the sequence of which is iterated several times, followed by the application of a square wave for a fixed period of time. Another example is to apply a square wave, for a first period of time, a constant voltage for a second period of time, and triangle wave for a third period of time, in sequential segments, and iterate the sequence multiple times until the electrophoresis run is complete.

Another preferred method for obtaining high-quality separations is to apply different waveform patterns over time, and apply a varying frequency or varying voltage ramp, or a combination of both, to the electrophoretic separation.
Another preferred method uses shorter periods of time for the frequency ramp. For example, a square wave varying from plus 250 V/cm to minus 100 V/cm with a frequency ramp of 15 Hz down to 0.5 Hz over a period of 30 seconds, followed by a Triangle wave varying from plus 250 V/cm to minus 100 V/cm with a frequency ramp of 10 Hz to 5 Hz over a period of 30 seconds, with the square/triangle wave sequence iterated 90 times for a total run time of 90 minutes.

The time range for each applied wave form varies from 0.5 seconds up to 20 minutes. A preferred range is from 15 seconds to 10 minutes. An even more preferred time frame is from 10 seconds to 120 seconds.

The frequency range for each applied wave form varies from 100 Hz to 0.5 Hz. A preferred frequency range is from 30 Hz to 0.5 Hz. Another preferred range is from 20 Hz to 2 Hz. It is preferable to ramp the frequency over the time period of each applied waveform. For example, if a square wave is applied for 1 minute, the frequency is ramped from 2 Hz to 15 Hz or from 15 Hz to 2 Hz over the same 1 minute timeframe. The output of the pulsed-field HV power supply is connected to the inlet electrodes through circuit board **74** (the set of electrodes on the sample or buffer tray side of the capillary array) as shown in FIG. **8****.** , whereas the outlet electrode (electrode on the reservoir side of the capillaries) is connected to ground **135** FIG. **12B****,** which is also the return path of the pulsed-field HV power supply.

A preferred process for performing multiplex capillary electrophoresis is to fill at least two capillaries with conductive medium containing a sieving matrix, introduce a sample into the capillaries through either electrokinetic injection or hydrodynamic injection (i.e by vacuum injecting or pressure injecting a sample into the capillaries), apply a varying voltage of the present invention via a pulse-field power supply across the capillaries to induce separation of the sample, and then detecting the sample as is passes through the windows of the capillaries by fluorescence r absorption detection.

One preferred method of applying a varying electric field across at least two capillaries comprises; applying a first pulse-field waveform at a first frequency across said capillaries for a first period of time; applying at least a second, different shape pulse-field waveform at a second frequency across said capillaries for a second period of time; thereafter repeating the said first and at least second pulse-field waveform at least twice of claim 1; wherein said first frequency varies with time within said first period of time and said second frequency varies with time within said second period of time.

### EXAMPLE 1:

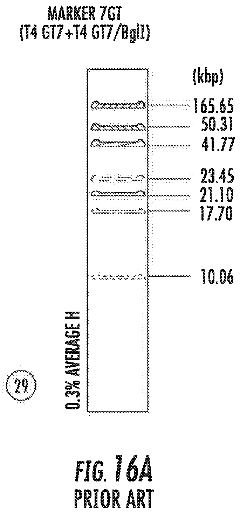

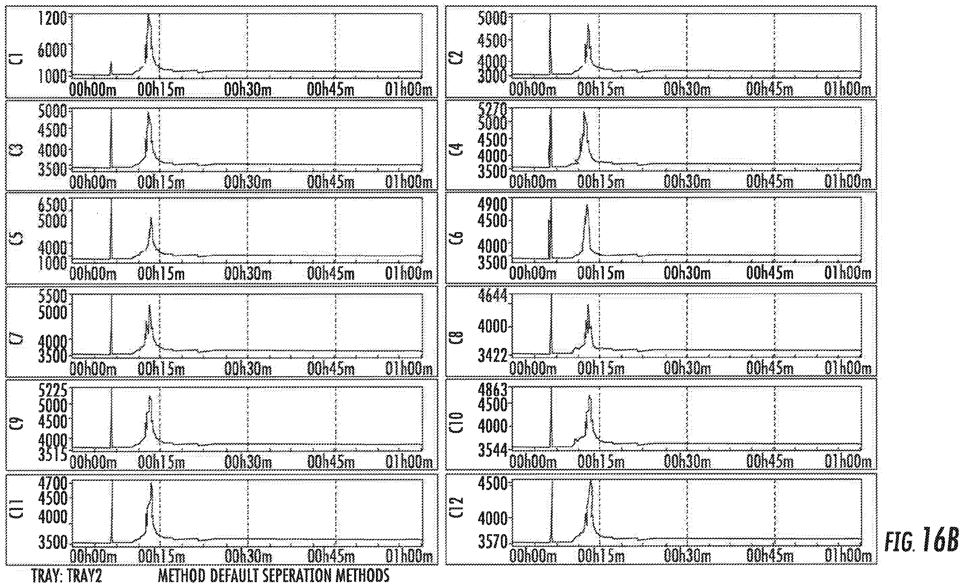

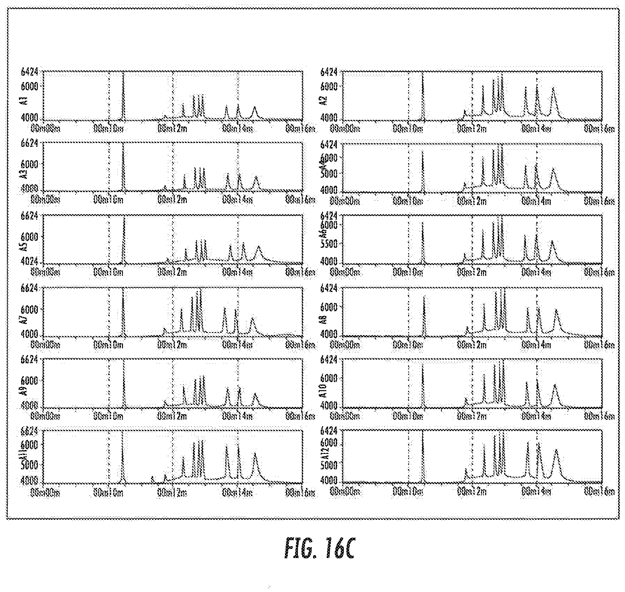

This example is not part of the claimed subject-matter. A pulse-field capillary electrophoresis gel "930 Gel" (available from Advanced Analytical Technology) was used for this example. The "930 Gel" sieving matrix was pumped into a plurality twelve capillaries with an effective length of 22 cm and a total length of 40 cm (50 um I.D.) using the capillary electrophoresis system described in this specification. A 7GT DNA sizing ladder (Available from Wako Chemical Company) comprised of DNA fragments with sizes of 10.06 kB, 17.7 kB, 21.2 kB, 23.45 kB, 41.77 kB, 50.31 kB, and 165.65 kB (FIG. **16A**) was used to evaluate separation efficiency on a capillary electrophoresis system. A sample of 150 pg/uL of the 7GT ladder in 1X TE Buffer was prepared as a sample for analysis. The gel-filled capillaries were treated with an electrophoresis pre-run by applying 2.0 kV for 1 second prior to injection of sample. The 7GT ladder sample was injected onto the capillary electrophoresis system using an electrokinetic injection of 5 kV for 5 sec. This was immediately followed by an electrophoresis run using a constant applied voltage of 7.2 kV for 3600 seconds, with the resulting electropherogram shown in FIG. **16B****.** This represents a best-case separation for prior-art constant-field capillary electrophoresis systems. The same sample (same injection, same concentration), was then re-analyzed using the capillary electrophoresis system of the present disclosure, but with pulsed-field applied voltage of plus 1.8 kV/minus 7.2 kV with a 5 Hz Square Wave. The resulting set of electropherograms for the 12-capillary system is shown in FIG. **16C****.** The ambient temperature for all analysis (both constant field and pulsed-field) was approximately 23 C. Separation with a Pulsed-field (FIG. **16C**) shows a much better baseline resolved electropherogram, with all 7 of the ladder elements clearly visible relative to the separation using prior-art constant-field (FIG. **15**), which shows a single, merged peak.

For this example, 12 capillaries were run simultaneously with the same applied constant or pulsed field.

### EXAMPLE 2:

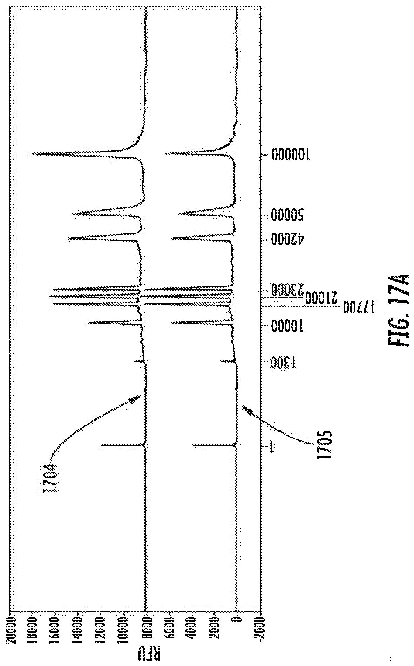

A pulse-field capillary electrophoresis gel "FP 5001 Large DNA Separation Gel" (available from Advanced Analytical Technology) was used for this example. The "FP 5001 Large DNA Separation Gel" sieving matrix was pumped into a plurality twelve capillaries with an effective length of 22 cm and a total length of 40 cm (50 um I.D.) using the capillary electrophoresis system described in this specification. A 7GT DNA sizing ladder (Available from Wako Chemical Company) comprised of DNA fragments with sizes of 10.06 kB, 17.7 kB, 21.2 kB, 23.45 kB, 41.77 kB, 50.31 kB, and 165.65 kB (FIG. **16A**) was used to evaluate separation efficiency on a capillary electrophoresis system. A sample of 150 pg/uL of the 7GT ladder in 1X TE Buffer was prepared as a sample for analysis by dilution in 0.25X Tris-EDTA buffer. The gel-filled capillaries were treated with an electrophoresis pre-run by applying 2.0 kV for 1 second prior to injection of sample. The 7GT ladder sample was injected onto the capillary electrophoresis system using an electrokinetic injection of minus 5 kV for 5 sec. This was immediately followed by an electrophoresis run using two different conditions. FIG. **17A** (Top trace-**1704**) was obtained using an applied voltage consisting of a Triangle Wave (plus 2.0 kV to minus 7.2 kV) with a frequency of 2 to 7 Hz, varied linearly over a period of 30 seconds, followed by a square wave (plus 2.0 kV to minus 7.2 kV) with a frequency of 2 to 7 Hz, varied linearly over a period of 30 seconds. The Triangle wave (30 seconds) followed by Square wave (30 seconds) was iterated for 100 times for a total run time of 100 min. FIG. **17A** (bottom trace **1705**) was obtained using an applied voltage (not according to the claimed invention) consisting of a Square Wave (plus 2.0 kV to minus 7.2 kV) with a frequency of 2 to 7 Hz, varied linearly over a period of 30 seconds. The Square wave (30 seconds) was iterated for 200 times for a total run time of 100 min. For the 7GT ladder traces, the fragment separation was similar for both the top trace and the bottom trace, indicating that the application of the iterated triangle/square waveform (FIG. **17A** top trace) did not substantially affect the separation of the 7GT fragments, as compared to a pure square-wave method without iterations (FIG. **17A** lower trace).

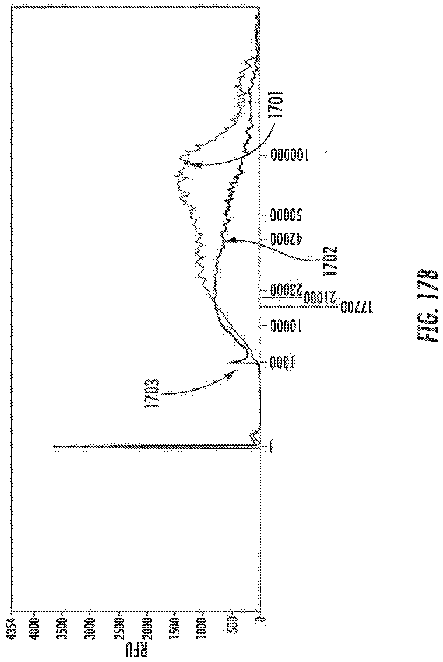

These same set of waveforms were applied to the separation of a DNA smear. A gDNA sample (Sample A) was diluted to 150 pg/uL in 0.25 Tris-EDTA buffer. The gel-filled capillaries were treated with an electrophoresis pre-run by applying 2.0 kV for 1 second prior to injection of sample. Sample A was injected onto the capillary electrophoresis system using an electrokinetic injection of minus 5 kV for 5 sec. This was immediately followed by an electrophoresis run using two different conditions. FIG. **17B** (Trace **1701**) was obtained using an applied voltage consisting of a Triangle Wave (plus 2.0 kV to minus 7.2 kV) with a frequency of 2 to 7 Hz, varied linearly over a period of 30 seconds, followed by a square wave (plus 2.0 kV to minus 7.2 kV) with a frequency of 2 to 7 Hz, varied linearly over a period of 30 seconds. The Triangle wave (30 seconds) followed by Square wave (30 seconds) was iterated for 100 times for a total run time of 100 min. FIG. **17B** (Trace **1702**) was obtained using an applied voltage (not according to the invention) consisting of a Square Wave (plus 2.0 kV to minus 7.2 kV) with a frequency of 2 to 7 Hz, varied linearly over a period of 30 seconds. The Square wave (30 seconds) was iterated for 200 times for a total run time of 100 min. Note that the trace **1701** had a much higher average smear size of 73,692 bp vs trace **1702** with an average smear size of 53,478 bp. Also, the trace **1701** (FIG. **17B**) obtained with the triangle/square iterated blend shows no anomalous system peak **1703** (FIG. **17B**). The actual size of Sample A is roughly 70 kpb as determined by normal Pulse-Field slab gel electrophoresis, which matches the results obtained with the pulse-field capillary system of the present invention.

As can be seen from the above description, the pulsed-field multiplex capillary electrophoresis system allows for the multiplexed, enhanced separation of fragments with sizes up to >150 kB, compared to prior-art constant-field multiplex capillary electrophoresis systems.

## Claims

1. An electrophoresis method of applying an electric field across at least two capillaries, comprising;
applying a first pulse-field waveform at a first frequency across said capillaries for a first period of time;
applying at least a second, different shape pulse-field waveform at a second frequency across said capillaries for a second period of time; thereafter repeating said first and at least second pulse-field waveform at least twice,
wherein said first and second pulse-field waveforms are selected from the group of square, triangle, sine, and sawtooth waveforms, or any combination or blend of waveforms.

2. The method of claim 1, wherein said first frequency varies with time within said first period of time and said second frequency varies with time within said second period of time.

3. The method of claim 1, wherein said first and second periods of time are less than 10 minutes each.

4. The method of claim 3, wherein said first and second periods of time are less than 5 minutes each.

5. The method of claim 4, wherein said first and second periods of time are less than 1 minute each.

6. The method of claim 1, which includes detecting a sample in windows of said capillaries by fluorescence or absorption detection.

7. An electrophoresis method of applying an electric field across two capillaries, comprising;
applying a first pulse-field waveform at a first frequency across said capillaries for a first period of time;
applying a second, different shape pulse-field waveform across said capillaries at a second frequency for a second period of time;
applying at least a third different shape pulse-field waveform at a third frequency for a third period of time; and thereafter, repeating the first, second and at least third pulse-field waveform applications.

8. The method of claim 7, wherein said first frequency varies with time within said first period of time, said second frequency varies with time within said second period of time, and said third frequency varies with time within said third period of time.

9. The method of claim 7, wherein said first and second pulse-field waveforms are selected from the group of square, triangle, sine, and sawtooth waveforms.

10. The method of claim 7, wherein said first and second periods of time are less than 10 minutes each.

11. The method of claim 10, wherein said first and second periods of time are less than 5 minutes each.

12. The method of claim 11, wherein said first and second periods of time are less than 1 minute each.

13. The method of claim 7, wherein said first, second and third frequencies vary within the range of 2 HZ to 15 Hz.

14. The method of claim 7, which includes detecting a sample in windows of said capillaries by fluorescence or absorption detection.

## Patentansprüche

1. Elektrophoreseverfahren des Anlegens eines elektrischen Feldes über mindestens zwei Kapillaren, umfassend:
Anlegen einer ersten Pulsfeldwellenform mit einer ersten Frequenz über die Kapillaren für eine erste Zeitdauer,
Anlegen mindestens einer zweiten Pulsfeldwellenform mit einer anderen Form und einer zweiten Frequenz über die Kapillaren für eine zweite Zeitdauer, danach mindestens zweimaliges Wiederholen der ersten und mindestens zweiten Pulsfeldwellenform,
wobei die erste und zweite Pulsfeldwellenform aus der Gruppe von Rechteck-, Dreieck-, Sinus- und Sägezahnwellenformen oder einer beliebigen Kombination oder Mischung von Wellenformen ausgewählt werden.

2. Verfahren nach Anspruch 1, wobei die erste Frequenz innerhalb der ersten Zeitdauer im Lauf der Zeit variiert und die zweite Frequenz innerhalb der zweiten Zeitdauer im Lauf der Zeit variiert.

3. Verfahren nach Anspruch 1, wobei die erste und die zweite Zeitdauer jeweils weniger als 10 Minuten betragen.

4. Verfahren nach Anspruch 3, wobei die erste und die zweite Zeitdauer jeweils weniger als 5 Minuten betragen.

5. Verfahren nach Anspruch 4, wobei die erste und zweite Zeitdauer jeweils weniger als 1 Minute betragen.

6. Verfahren nach Anspruch 1, welches das Detektieren einer Probe in Fenstern der Kapillaren durch Fluoreszenz- oder Absorptionsdetektion umfasst.

7. Elektrophoreseverfahren zum Anlegen eines elektrischen Feldes über zwei Kapillaren, umfassend:
Anlegen einer ersten Pulsfeldwellenform mit einer ersten Frequenz über die Kapillaren für eine erste Zeitdauer,
Anlegen einer zweiten Pulsfeldwellenform mit einer anderen Form und einer zweiten Frequenz über die Kapillaren für eine zweite Zeitdauer,
Anlegen mindestens einer dritten Pulsfeldwellenform mit einer anderen Form und einer dritten Frequenz für eine dritte Zeitdauer, und danach Wiederholen der ersten, zweiten und mindestens dritten Anwendungen der Pulsfeldwellenformen.

8. Verfahren nach Anspruch 7, wobei die erste Frequenz innerhalb der ersten Zeitdauer im Lauf der Zeit variiert, die zweite Frequenz innerhalb der zweiten Zeitdauer im Lauf der Zeit variiert und die dritte Frequenz innerhalb der dritten Zeitdauer im Lauf der Zeit variiert.

9. Verfahren nach Anspruch 7, wobei die erste und die zweite Pulsfeldwellenform aus der Gruppe von Rechteck-, Dreieck-, Sinus- und Sägezahnwellenformen ausgewählt werden.

10. Verfahren nach Anspruch 7, wobei die erste und zweite Zeitdauer jeweils weniger als 10 Minuten betragen.

11. Verfahren nach Anspruch 10, wobei die erste und zweite Zeitdauer jeweils weniger als 5 Minuten betragen.

12. Verfahren nach Anspruch 11, wobei die erste und zweite Zeitdauer jeweils weniger als 1 Minute betragen.

13. Verfahren nach Anspruch 7, wobei die erste, zweite und dritte Frequenz im Bereich von 2 Hz bis 15 Hz variieren.

14. Verfahren nach Anspruch 7, welches das Detektieren einer Probe in Fenstern der Kapillaren durch Fluoreszenz- oder Absorptionsdetektion umfasst.

## Revendications

1. Procédé d'électrophorèse consistant à appliquer un champ électrique à travers au moins deux capillaires, comprenant ;
l'application d'une première forme d'onde de champ pulsé à une première fréquence à travers lesdits capillaires pendant une première période de temps ;
l'application d'au moins une deuxième forme d'onde de champ pulsé de forme différente à une deuxième fréquence à travers lesdits capillaires pendant une deuxième période de temps ; la répétition ultérieure de ladite première et au moins de la deuxième forme d'onde de champ pulsé au moins deux fois,
où lesdites première et deuxième formes d'ondes de champ pulsé sont choisies dans le groupe des formes d'ondes carrées, triangulaires, sinusoïdales et en dents de scie, ou toute combinaison ou mélange de formes d'ondes.

2. Procédé de la revendication 1, où ladite première fréquence varie avec le temps dans ladite première période de temps et ladite deuxième fréquence varie avec le temps dans ladite deuxième période de temps.

3. Procédé de la revendication 1, où lesdites première et deuxième périodes de temps sont inférieures à 10 minutes chacune.

4. Procédé de la revendication 3, où lesdites première et deuxième périodes de temps sont inférieures à 5 minutes chacune.

5. Procédé de la revendication 4, où lesdites première et deuxième périodes de temps sont inférieures à 1 minute chacune.

6. Procédé de la revendication 1, qui inclut la détection d'un échantillon dans les fenêtres desdits capillaires par détection par fluorescence ou par absorption.

7. Procédé d'électrophorèse consistant à appliquer un champ électrique à travers deux capillaires, comprenant ;
l'application d'une première forme d'onde de champ pulsé à une première fréquence à travers lesdits capillaires pendant une première période de temps ;
l'application d'une deuxième forme d'onde de champ pulsé de forme différente à travers lesdits capillaires à une deuxième fréquence pendant une deuxième période de temps ;
l'application d'au moins une troisième forme d'onde de champ pulsé de forme différente à une troisième fréquence pendant une troisième période de temps ; et la répétition ultérieure de la première, de la deuxième et d'au moins la troisième applications de forme d'onde de champ pulsé.

8. Procédé de la revendication 7, où ladite première fréquence varie avec le temps dans ladite première période de temps, ladite deuxième fréquence varie avec le temps dans ladite deuxième période de temps, et ladite troisième fréquence varie avec le temps dans ladite troisième période de temps.

9. Procédé de la revendication 7, où lesdites première et deuxième formes d'ondes de champ pulsé sont choisies dans le groupe des formes d'ondes carrées, triangulaires, sinusoïdales et en dents de scie.

10. Procédé de la revendication 7, où lesdites première et deuxième périodes de temps sont inférieures à 10 minutes chacune.

11. Procédé de la revendication 10, où lesdites première et deuxième périodes de temps sont inférieures à 5 minutes chacune.

12. Procédé de la revendication 11, où lesdites première et deuxième périodes de temps sont inférieures à 1 minute chacune.

13. Procédé de la revendication 7, où lesdites première, deuxième et troisième fréquences varient dans la plage de 2 Hz à 15 Hz.

14. Procédé de la revendication 7, qui inclut la détection d'un échantillon dans les fenêtres desdits capillaires par détection par fluorescence ou par absorption.
